Europäisches Patentamt

**European Patent Office**

**Office européen des brevets**

(11) Publication number: **0 016 266**
**A1**

## (12) EUROPEAN PATENT APPLICATION

(21) Application number: **79300405.2**

(22) Date of filing: **14.03.79**

(51) Int. Cl.³: **F 24 J 3/02**

(43) Date of publication of application:
**01.10.80 Bulletin 80/20**

(84) Designated Contracting States:
**DE FR GB**

(71) Applicant: **Suntron Energy Systems Ltd.**
**390 Denison Street**
**Markham Ontario L3R 1B9(CA)**

(72) Inventor: **Wilson, Wilfred William**
**95 Thorncliffe Park Drive Apartment 4106**
**Toronto, Ontario, M4H 1L7(CA)**

(74) Representative: **Mitchell, Alan**
**Haseltine Lake & Co. 28 Southampton Buildings**
**Chancery Lane**
**London WC2A 1AT(GB)**

(54) **Solar energy collector.**

(57) A solar energy collector including a chamber sealed against communication with the atmosphere and including a wall (22) presenting a reflective inner surface (23) and a light energy transparent wall (34) defining a window for the chamber, the chamber enclosing a heat exchanger (48) having an extended fluid conduit formation with an inlet (48) at one end and an outlet (50) at the other for establishing fluid communication therewith from without the sealed chamber, the extended conduit formation including a plurality of conduit portions bearing a surface coating capable, upon impingement, of transforming light energy to heat energy and so spaced apart as to define a plurality of unobstructed paths extending from the window to the reflective inner surface (23) whereby light energy can be directed along reflected paths so as to impinge upon those portions of the surface coatings remote from the window; and a separate light energy transforming heating source for the sealed chamber.

FIG 1

Croydon Printing Company Ltd.

1

## "SOLAR ENERGY COLLECTOR"

### NATURE OF THE INVENTION.

This invention relates to improvements in solar energy collectors and particularly to collectors in which light energy is adapted to be transformed into heat energy on impingement of such light energy upon a suitably coated target, which target includes a heat conductive conduit system or heat exchanger or the like which system uses a fluid medium for conducting generated heat energy away from such impingement areas to other stations or systems.

More particularly, this invention relates to improvements in solar energy collectors in which the aforementioned conduit system or heat exchanger is enclosed within a sealed chamber provided with a gaseous medium or an atmosphere, and in which the sealed chamber is provided with a suitable window permeable to light energy or radiation and with an internal reflector and the heat conductive conduit or heat exchanger so located therewithin as to provide a focal point for the impingement thereupon of light energy or radiation either directly or by reflection of same.

### BACKGROUND

According to earlier concepts a solar energy collector can be fashioned by supporting a suitably coated metallic conduit section of a heat exchanger to extend along the focal line of a parabolically shaped reflective sheet.

The parabolic form will substantially focus a major portion of the sun's radiation directed onto such reflective sheet upon the extended coated conduit section. However, with this proposal it is necessary for the parabolic reflector to closely track the sun in its apparent path, for otherwise, the line of focus of such parabolic reflective surface will shift and light will no longer impinge with such intensity upon the coated surfaces.

Where the solar energy collector is tracking the sun then continuously operating tracking equipment must be provided which is a costly addition to the construction and operation of such unit.

OBJECTS OF THE INVENTION

It is the principal object of this invention to provide an improved simplified solar energy collector of the type mentioned which has increased capability than heretofore of transforming available light energy to heat energy and extracting same for useful purposes and which operates with or without close tracking of the sun's apparent path.

More particularly, it is the object of this invention to maximize impingement of available light energy upon the coated regions of the target or the heat exchanger over the range of positions assigned to such collector to thereby achieve a higher level of efficiency in recovery of useful heat energy overall.

It is still another object to utilize a greater proportion of the available radiation to heat the atmosphere entrapped within the enclosure whereby conduction of the transformed heat energy to the heat exchanger is enhanced and in that manner promote in even greater degree the overall efficiency of the operation.

It is also an important object to provide a solar energy collector which is readily fabricated and maintained whereby manufacturing the costs can be kept at a minimum and the likelihood of adoption by both the commercial market and the domestic market substantially increased.

## FEATURES OF THE INVENTION

One feature of this invention resides in providing a solar energy collector in which a housing defines a chamber enclosing a suitable gaseous medium sealed against communication with the atmosphere and includes a wall presenting a reflective inner surface and a wall permeable to light energy defining a window for such chamber, the first mentioned wall being arranged in spaced relation to the window and a heat exchanger mounted within the said sealed chamber and located between the first mentioned wall and the window, the heat exchanger having an extended fluid conduit formation with an inlet at one end and an outlet therefore at the other end and means associated with the inlet and the outlet respectively for establishing fluid communication therewith from without the sealed chamber, the extended conduit formation including a plurality of heat conductive conduit portions bearing surface coatings capable of transforming impinged light energy to heat energy, the conduit portions being arranged in spaced apart relation to define a plurality of unobstructed paths extending from said second mentioned wall to said first mentioned wall whereby energy directed along the paths can be reflected from the reflective inner surface and impinge upon those portions of the surface coatings remote from the window.

Still another feature resides in providing within such chamber a separate heating source which includes a lens having a focal point lying within the sealed chamber and a target heat dissipating plate located within the chamber in the region of the focal point, the plate bearing a suitable surface coating capable of transforming impinged light energy to heat energy and dissipating such heat energy to the entrapped gaseous medium surrounding the heat exchanger whereby such gaseous medium is maintained at a sufficiently high temperature promoting the conduction of transformed light energy as heat energy through the heat exchanger thereby increasing efficiency over all.

4

Still another feature of the invention resides in providing the reflective inner surface aforementioned in the form of the substantially uniform convex portion located substantially centrally whereby light energy directed the unobstructed paths and reflected from the convex portion diverges and scatters such that a greater incidence of impringement upon all coated regions is achieved.

DESCRIPTION OF THE INVENTION

These and other objects and features appear in the following description to be read in conjunction with the several drawings illustrating two embodiments of the invention in which like numerals denote like parts throughout the several views and in which:-

Figure 1 is a perspective view of a solar energy collector embodying the invention taken from a point above to the right of one end of such collector;

Figure 2 is a vertical cross-sectional view of the unit illustrated in Figure 1 taken along the lines 2-2 of Figure 1;

Figure 3 is a part sectional view of a portion of the unit illustrated in Figures 1 and 2 broken away, and taken along the lines 3-3 of Figure 2;

Figure 4 is a perspective view of one component of the solar energy collector embodying the invention broken away from its support with the collector; and

Figure 5 is a schematic view in vertical cross-section similar to that illustrated in Figure 2.

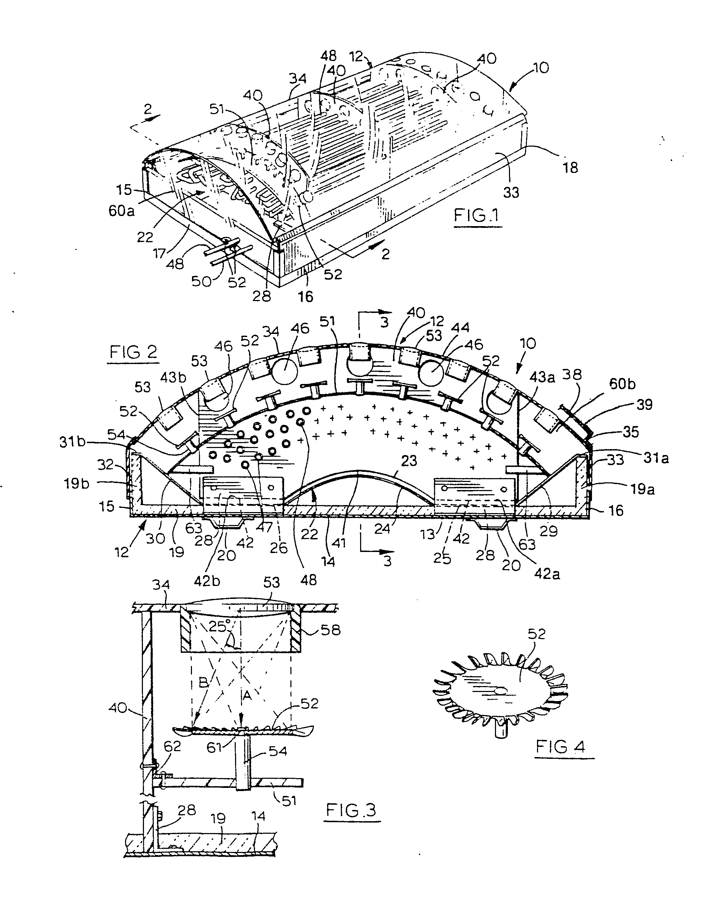

A solar energy collector constructed in accordance with the invention is indicated generally at 10 in Figures 1 and 2 of the drawings.

Collector 10 comprises a housing or enclosure 12 which includes a base 13 derived from suitable steel sheeting or the like formed to present a central flat support portion 14 presenting opposed upturned marginal side edges 15 and 15 and end edges 17 and 18 respectively.

Mounted upon and extending over the upper surface

of the central flat portion 14 of base 13 within upturned side and end edges 15,16 and 17, 18 respectively are layers 19 of insulation derived from asbestos or other suitable fire proof or fire retardant materials.

Substantially rigid spaced channel members 20 are mounted to extend along and below the lower surface of central flat portion 14 of base 13, which channel members serve to strengthen the housing 12 and also provide means for attaching or for anchoring housing 12 upon a suitable support (which is not shown).

Mounted to overlie insulation layers 19 is a wall formation derived from a suitable metallic sheet which is provided with a light energy reflective inner surface throughout its extent as at 23.

Wall formation 22 includes a convex portion 24 centrally thereof which extends longitudinally above base 13 having a part hollow-cylindrical configuration in the preferred embodiment. Convex portion 24 is flanked by planar portions 25 and 26 respectively, shown in broken outlines in Figure 2, which flanking portions merge with obliquely extending portions 29 and 30 respectively extending upwardly and outwardly at an angle of the order of 40 degrees with respect to the horizontal or plane of the central flat portion 14.

The remote margins 31a and 31b of wall formation 22 overlie vertical sections 19a and 19b of layers of suitable insulation similar to insulation layers 19 which vertical sections extend upwardly in abutment along side edges 15 and 16 and 17 and 18 (not shown) as best seen in Figure 2.

Vertical insulation sections 19a and 19b can be secured in position by the biasing effect of angled portions 29 and 30 bearing down upon them through the overlying margins 31a and 31b.

Fasteners such as screws, rivets or bolts can be utilized to establish a more secure mechanical connection

6

between the flanking portions 25 and 26 of wall formation 22 and base 13 if desired.

Furthermore, insulation layers 19 and 19a and 19b can be suitably adhered to the abutting supporting surfaces by an acceptable adhesive if desired.

Extending upwardly from the side edge 15 is one embodiment of a supporting panel or strip 32. An alternative supporting panel or strip 33 is shown upstanding from the opposed side edge 16 for purposes of comparison.

Supporting panel 32 comprises an elongated metallic flat member disposed inwardly at its upper edge to present an elongated supporting surface to the edge formation of a uniformly convex transparent or light permeable panel 34 which has in cross-section a part hollow-cylindrical configuration of a curvature substantially concentrix with curvature of convex portion 24 of lower wall formation 22.

Light energy permeable panel 34 can be secured to supporting panel 32 by a series of rivets or other fasteners or by adhesive or by a combination of those elements.

Should opposed side edge 16 likewise be provided with the support panel corresponding to support panel 32 the opposed edge of light energy permeable panel 34 would be secured in the same fashion.

The opposed ends of housing 12 are closed by suitable panels 60a, 60b derived from suitable metallic or transparent sheeting.

The abutting edges of the several components defining the housing 12, the base 13, support panels 32, light energy permeable panel 34 and the end panels 60a and 60b are suitably contoured and secured together so as to establish a sealed enclosure or chamber within housing 12 whereby entrapped atmosphere or other suitable gaseous medium may be confined to same as the medium for heat transfer as will be explained.

The alternative support panel 33 illustrated in Figure 2 and mounted upon side edge 16 includes a first recess 35 in which the opposed edge formation of light energy permeable panel 34 registers. Side panel 33 includes a second recess 39 spaced from the first mentioned recess 35 in which the edge of a second outer transparent or light energy permeable panel 38 can be registered and anchored.

Only a portion of such light energy permeable panel 38 is illustrated in Figure 2 for purposes of simplifying the illustration but panel 38, like panel 34 is intended to extend in substantially spaced overlying concentric relation and be similarly anchored at the opposite edge upon a support panel having a structure corresponding to that indicated at 33.

Upstanding from base 13 and within the perimeter of the central flat portion 14 are spaced brackets 28 located in pairs at intervals measured along the longitudinal dimension of housing 12.

Each pair of brackets 28 support an upstanding bulk head 40 derived from a sheet of suitable transparent material such as tempered glass or plexiglass or polycarbonate plastic.

Each bulk head 40 includes a lower central concave perimeter corresponding to the curvature of convex portion 24 of lower wall formation 22. The perimeter of bulk head 40 at either side of the central concave perimeter has a linear extent as at 42a and 42b respectively corresponding substantially to the extent of flanking portions 25 and 26 of lower wall formation 22.

The horizontal edges 42a and 42b terminate in upright edges 43a, 43b arranged at right angles with bulk head 40 bounded uppermost by a curvature upper edge formation 44 corresponding to the curvature of light energy permeable panel 34.

Each bulk head 40 is provided with a number of larger openings 46 adjacent to the upper perimeter to promote the continued passage of heated atmosphere or gaseous medium between adjacent compartments within housing 12.

The heated atmosphere or gaseous medium may also escape from compartment to compartment within the housing 12 around the upright end edges 43a, 43b presented by the bulkheads 40.

Each bulk head 40 also includes a pattern of circular apertures 47 arranged in longitudinal alignment to receive and support extended lengths of selected conduit sections 48 spaced apart in parallel relation.

Conduit sections 48 in the preferred embodiment are provided with an integral coating such as a coating of lamp black which is capable of transforming impinged light energy or radiation to heat energy. Conduit sections 48 are interconnected in series by elbows, not shown, so as to define a continuous flow path for water circulated within the system or heat exchanger from inlet 48 to outlet 50 by means of a suitable pump (not illustrated).

A valve 42 can be provided to control the flow of water through such extended conduit system if desired.

The bank of conduit sections 48 are supported in spaced parallel relation preferably and such that the upper surfaces or regions of each blackened conduit section 48 are exposed to direct radiation from the light energy source and so that unobstructed paths for light energy are established through the bank which paths extend from the transparent or light energy permeable panel 34 to the reflective surface of lower wall formation 22.

According to the arrangement proposed a substantial portion of light energy so reflected from the surfaces of wall formation 22 will impinge upon those regions of the surface coating of conduit sections 48 remote from the light energy permeable panel 34, that is from below or from behind and so contribute additional heat energy by the transformation of light energy in those regions of impingement.

Hence a more uniform application and conduction of heat energy to the system will develop.

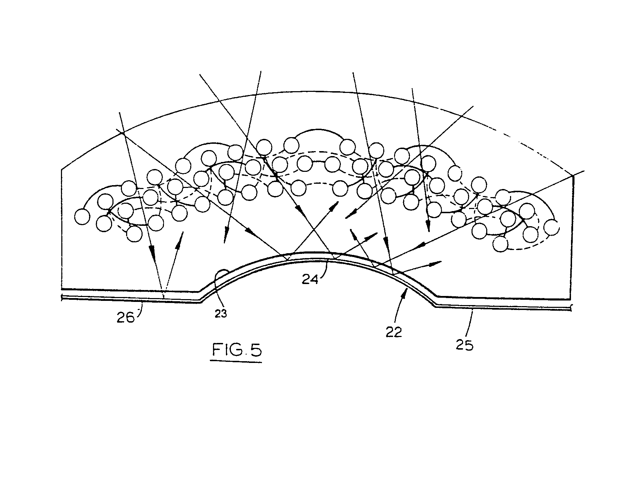

One preferred mounting of conduit sections 48 to achieve an abundance of direct radiation as well as unobstructed light paths is illustrated in Figure 5.

The part annular bank of spaced circles appearing in Figure 5 represent the spacing of the cross-sections of the many conduit sections 48 disposed in parallel relation within the housing 12 as earlier described.

The solid lines linking adjacent circles represent end conduit connections or elbows between adjacent conduit sections at one end of the housing 12 and the broken lines linking adjacent circles represent end conduit connections or elbows between adjacent conduit sections at the opposite end of housing 12 so as to establish a continuous flow path for the heat exchanger so defined.

The arrowed lines appearing in Figure 5 represent unobstructed light energy paths leading from the light energy permeable panels 34 and 38 if included, to the reflective inner surfaces of wall formation 22 illustrating the manner in which such reflected light energy or radiation is directed to and impinged upon the regions of the coated surfaces of conduit sections 48 from below or from the side.

Light energy or radiation striking the convex portion 24 of lower wall formation 22 will be reflected in a diverging beam whereby the incidence of impingement of available reflected light energy upon the blackened coated surfaces of conduit sections 48 is very much increased and efficiency of transformation and conduction of heat energy for useful purposes enhanced.

Conduit sections 48 with their blackened surfaces or coating normally receive abundant light energy directly from above. Upon impingement there is a transformation of such light energy into heat energy which latter energy conducted from the surface of the heat conductive metallic conduit sections 48 to the internal flowing fluid medium constitutes the main input for such system or heat exchanger.

By providing that reflected light energy should reach the regions of the coated surfaces of the conduit sections 48 from below through the patterns of reflection described, greater incidence of impingement is insured so that the recovery from available light energy transformed to heat energy is increased and indeed can be conducted through the walls of the conduit section of the heat exchanger from substantially all regions of the coated surfaces to the internal fluid and from there to remote stations or systems.

Moreover the capture of reflected light energy in the manner outlined modifies the condition of the conduit sections 48 themselves such that the heat conduction paths per unit of length are more uniform tending to eliminate the imbalance or differences in temperatures of the conduit sections comparing the upper surfaces with the lower surfaces thereby preserving the security of the conduit sections against rupture and has the effect of reducing the likelihood of losing heat to the atmosphere by radiation from the coated upper surfaces of the conduit sections through the light energy permeable panel 34.

Arranged to extend upwardly and spaced along two arcuate bands 51, one located adjacent each end of the solar collector 10 within housing 12 and in positions so as not to cast any appreciable shadows upon conduit sections 48 are a plurality of metallic plate members or discs 52 supported above arcuate bands 51 on heat insulated cylindrically shaped supports 54.

Each plate member 52 is presented in substantially parallel relation to the overlying portion of transparent or light energy permeable panel 34 and is of thin copper sheeting preferably not more than o.o4 inches thick.

The periphery of each plate member 52 has been severed so as to present a plurality of blade-like portions 54 angled with respect to the planar central portion of member 52 so as to promote the transfer of heat energy from plate member 52 to the gaseous medium entrapped within housing 12 all in a well known manner.

Metallic copper members or plates 52 are provided with blackened upper surface coatings which serve to transform impinged light energy to heat energy all in a well known manner.

According to the invention a number of lenses 53 can be set into and form part of overlying panel 34 and so selected and arranged that their respective focal points center onto place members 52 which focal points will be well within the confines of housing 12.

Thus lenses 53 will direct focused light energy falling substantially perpendicularly upon the light permeable wall formation 34 onto such plate members 52 or within a relatively small angle of the perpendicular.

The lenses illustrated in Figures 2 and 3 are convex and are supported by transparent cylindrical sleeves 58 suitably secured to the panel 34 with one lens 53 for each plate member 52.

As best seen in Figure 3 lens 53 will focus sunlight on its respective metallic plate member 52 when sunlight falls along the axis of such lens indicated by the arrow A and continue to impinge throughout the sweep of an angle of the order $25^{\circ}$ as indicated by the axis arrow B.

According to the alternative embodiment illustrated in Figure 2 and described all lenses 53 are set into inner transparent or light energy permeable panel 34 and so confined within the outer transparent or light energy permeable panel 38.

A threaded fastener 61 as seen in Figure 3 can be provided to secure each metallic plate member 52 to its respective insulator or support 54 and an angle piece 62 with appropriate fasteners may be utilized to secure support 51 to adjacent bulkhead 40.

Bracket extensions 63 illustrated in Figure 2 are secured to the adjacent bulkhead 40 and extend outwardly to either side whereby the extreme ends of the arcuate supporting panel 51 may be anchored.

The canopy represented by the transparent panels 43 and 38 can be derived from tempered glass instead of plastic materials where high temperatures may be encountered. If the solar collector 10 should be operated without fluid flowing through the conduit sections 48 the temperature of the gaseous medium in the chamber can rise appreciably and exceed warping temperatures of thermoplastic materials such as clear acrylic.

Wall formation 22 presenting the light reflective surface can be selected from either polished aluminum or stainless steel sheeting.

Preferably conduit sections 48 are derived from suitable copper tubing tubing of the high heat conductivity of such metal.

Metallic plate members 52 which generate heat upon the transformation of light energy have been assigned a thickness of the order of 0.04 inches for the purpose of reducing the mass of such members of minimize consumption of heat energy to raise such mass to the temperature of the gaseous medium and thereby increase the efficiency of heat transfer from such members to the surrounding gaseous medium and promote the transfer of heat energy to the heat exchanger.

Suitable blackened coatings such as lamp black may be applied to the target aress, namely, the exposed surfaces of conduit sections 48 and the copper disc or plates 52.

While the preferred embodiments of this invention have been described and illustrated persons skilled in this field will be able to introduce modifications or

13

variations in those structures without departing from the
spirit or scope of, the invention as defined in the
appended claims.

1

CLAIMS

1.     In a solar energy collector a chamber inclosing a suitable gaseous medium and sealed against communication with the atmosphere including a wall presenting a reflective inner surface and a wall permeable to light energy defining a window for said chamber, said first mentioned wall being arranged in spaced relation to said window, a heat exchanger mounted within said sealed chamber and located between said first mentioned wall and said window, said heat exchanger having an extended fluid conduit formation with an inlet at one end and an outlet therefor at the other end, means associated with said inlet and said outlet respectively for establishing fluid communication therewith from without said sealed chamber, said extended conduit formation including a plurality of heat conductive conduit portions bearing surface coatings capable of transforming impinged light energy to heat energy, said conduit portions being arranged in spaced apart relation to define a plurality of unobstructed paths extending from said second mentioned wall to said first mentioned wall whereby light energy directed along said paths can be reflected from said reflective inner surface and impinge upon those portions of said surface coatings remote from said window.

2.     A solar energy collector according to claim 1 in which separate chamber heating means are provided including light energy focusing means having a focal point lying within said sealed chamber and target heat dissipating means located within said chamber in the region of said target heat dissipating means bearing a surface coating capable of transforming impinged light energy to heat energy.

3. A solar energy collector according to claim 1 in which said first mentioned wall has a substantially uniform convex portion located substantially centrally thereof whereby light energy reflected from said centrally located convex portion is scattered.

4. A solar energy collector according to claim 3 in which said window has a substantially uniform correspondingly convex portion located centrally thereof and overlying the convex portion of said first mentioned wall with said window and first mentioned wall arranged in substantially uniform spaced apart relation.

5. A solar energy collector according to claim 4 in which said respective convex portions of said first mentioned wall and window are of part hollow-cylindrical-configuration.

6. A solar energy collector according to claims 1 to 5 inclusive in which said heat conductive conduit sections are supported in substantially parallel relation one to the other.

7. A solar energy collector according to claim 2 in which a plurality of separate chamber heating means are provided, each said light energy focusing means including a convex lens and said target heat dissipating means including a thin metallic disc arranged substantially at right angles to the principle axis of the lens and derived from copper or other high heat conductive metal or composite having similar properties.

8. A solar energy collector according to any preceding claim in which said heat conductive conduit sections and said target heat dissipating means are provided with blackened surface coatings.

9.   A solar energy collector according to any preceding claim in which said conduit portions bearing surface coatings are arranged in spaced apart generally side-by-side relation and so layered one upon the other in offset relation as to provide a bank of conduit portions having a plurality of unobstructed paths therethrough.

0016266

1/2

FIG.1

FIG 2

FIG.3

FIG 4

FIG.5

# EUROPEAN SEARCH REPORT

| Category | Citation of document with indication, where appropriate, of relevant passages | Relevant to claim |
|---|---|---|
| | US - A - 4 102 324 (NETHERTON)<br>* Column 3,lines 56-68; column 4,lines 1-41; figures 1,5,7 *<br>-- | 1 |
| | US - A - 4 083 358 (SCOTT)<br>* Column 2,lines 7-59; figures 1,2,3 *<br>-- | 1,8 |
| | US - A - 4 011 855 (ESHELMAN)<br>* Column 2, lines 21-68; column 3, lines 1-18; figures 1,2 *<br>-- | 1,8 |
| | US - A - 4 010 080 (TSAY)<br>* Column 1, lines 40-68; column 2, lines 1-46; figures 1,2 *<br>-- | 2 |
| | DE - A - 2 829 311 (WESLOW)<br>* Pages 1,2;figures 1-4 *<br>-- | 2 |
| | US - A - 3 964 464 (HOCKMAN)<br>* Column 4, lines 24-46; figure 4 *<br>-- | 3 |
| | US - A - 4 090 498 (BENSON)<br>* Column 4, lines 5-21; figure 3 *<br>---- | 3 |

## DOCUMENTS CONSIDERED TO BE RELEVANT

**CLASSIFICATION OF THE APPLICATION (Int. Cl. ¹)**

F 24 J 3/02

**TECHNICAL FIELDS SEARCHED (Int.Cl. ³)**

F 24 J

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-11-1979 | SMETS |

EPO Form 1503.1 06.78